# EUROPEAN PATENT APPLICATION

(11) **EP 4 528 421 A1**
(43) Date of publication of application: **26.03.2025**
(21) Application number: 23831678.0
(22) Date of filing: 04.04.2023
(51) Int. Cl.: G06F 1/16, G06F 3/14, H04R 3/00, H04R 5/027, G06F 11/32

(54) **ELECTRONIC DEVICE AND METHOD FOR CONFIGURING EXTENDED DISPLAY OF ELECTRONIC DEVICE**

(30) Priority: 27.06.2022 KR 20220078358; 04.08.2022 KR 20220097345
(71) Applicant: Samsung Electronics Co., Ltd., Suwon-si, Gyeonggi-do 16677 (KR)
(72) Inventor: KIM, Yongil, Suwon-si, Gyeonggi-do 16677 (KR)
(74) Representative: Gulde & Partner
(86) International application number: PCT/KR2023/004523
(87) International publication number: WO 2024/005312

(57) **Abstract**

An electronic device according to various embodiments comprises: a display; a first microphone; a second microphone spaced apart from the first microphone; a wireless communication circuit; and a processor operatively connected to the display, the first microphone, the second microphone, and the wireless communication circuit. The processor may be configured to: sense the activation of an extended display configuration function; establish wireless connection to an external device by using the wireless communication circuit; sense a sound output from the external device by using the first microphone and the second microphone; recognize the location of the external device on the basis of a first sound signal acquired by the first microphone and a second sound signal acquired by the second microphone; generate, on the basis of the recognized location of the external device, a first screen to be displayed on the display and a second screen to be displayed on a display of the external device; display the generated first screen on the display; and transmit the second screen to the external device by using the wireless communication circuit.

## Description

### [Technical Field]

This document relates to an electronic device and, for example, to an electronic device that provides extended display functions and a method for configuring an extended display of the electronic device.

### [Background Art]

Electronic devices (e.g., laptop personal computers (PCs), tablet PCs, smartphones, etc.) may provide user experiences through various applications. The electronic device may include a display, and may display images produced by applications through the display.

The electronic device may provide a multi-display function. The multi-display function is a function of displaying images from one image source on a plurality of displays, similar to the multi-display function in a desktop environment, and may also be implemented using a plurality of electronic devices including displays, such as laptop PCs or tablet PCs. For example, the electronic device may display images produced from the electronic device on a display of the electronic device and on a display of an external device connected via wired or wireless communication using the multi-display function.

### [Disclosure of Invention]

### [Technical Problem]

In the case where an electronic device provides a multi-display function while connecting with an external device, the external device may be positioned at any one of the top, bottom, left, or right of the electronic device, and its position needs to be precisely defined for the continuity of the image. If the position of the external device is not defined according to its actual position, it inevitably causes inconvenience when moving a window or moving a mouse cursor.

The electronic device allows the user to manually define the position of the external device when setting the position of the external device in the multi-display function. In this case, the user must directly set the position of the external device through a menu, which is a cumbersome task, and if the position is set incorrectly by the user, it may cause inconvenience.

Various embodiments of this document may provide an electronic device capable of automatically recognizing the position of the external device without user manipulation when providing an extended display function, and a method for configuring an extended display of the electronic device.

### [Solution to Problem]

An electronic device according to various embodiments may include a display, a first microphone, a second microphone disposed to be spaced apart from the first microphone, a wireless communication circuit, and a processor operatively connected to the display, the first microphone, the second microphone, and the wireless communication circuit, and the processor may be configured to detect activation of an extended display configuration function, establish a wireless connection with an external device using the wireless communication circuit, detect a sound output from the external device using the first microphone and the second microphone, recognize a position of the external device, based on a first sound signal obtained by the first microphone and a second sound signal obtained by the second microphone, produce a first screen to be displayed on the display and a second screen to be displayed on a display of the external device, based on the recognized position of the external device, display the produced first screen on the display, and transmit the second screen to the external device using the wireless communication circuit.

A method for configuring an extended display of an electronic device according to various embodiments may include detecting activation of an extended display configuration function, establishing a wireless connection with an external device, detecting a sound output from the external device using a first microphone and a second microphone, recognizing a position of the external device, based on a first sound signal obtained by the first microphone and a second sound signal obtained by the second microphone, producing a first screen to be displayed on a display of the electronic device and a second screen to be displayed on a display of the external device, based on the recognized position of the external device, displaying the produced first screen on the display, and transmitting the second screen to the external device.

An electronic device according to various embodiments may include a display, a speaker, a wireless communication circuit, and a processor operatively connected to the display, the speaker, and the wireless communication circuit, and the processor may be configured to detect activation of an extended display configuration function, establish a wireless connection with an external device using the wireless communication circuit, output a predetermined sound using the speaker, receive a recognition result of a position of the external device from the external device, produce a first screen to be displayed on the display and a second screen to be displayed on a display of the external device, based on the received recognition result of the position of the external device, display the produced first screen on the display, and transmit the second screen to the external device using the wireless communication circuit.

### [Advantageous Effects of Invention]

According to various embodiments of this document, an electronic device and a method for configuring an extended display of the electronic device may automatically recognize the position of an external device without user manipulation when providing an extended display function, thereby eliminating unnecessary manipulation by the user and preventing the position of the external device from being incorrectly defined.

### [Brief Description of Drawings]

FIG. 1 is a block diagram of an electronic device in a network environment according to various embodiments.
FIG. 2A and FIG. 2B illustrate an example of an electronic device according to various embodiments.
FIG. 3 illustrates an example of an extended display configuration screen according to various embodiments.
FIG. 4 is a block diagram of a first electronic device according to various embodiments.
FIG. 5 is a block diagram of a second electronic device according to various embodiments.
FIG. 6 illustrates operation modes depending on the positions of a first electronic device and a second electronic device according to various embodiments.
FIG. 7 is a flowchart illustrating a method for configuring an extended display of an electronic device according to various embodiments.
FIG. 8 is a flowchart illustrating the operation of an electronic device when the position of an external device is not recognized according to various embodiments.
FIG. 9 is a flowchart illustrating the case where an extended display function of an electronic device is released according to various embodiments.
FIG. 10A and FIG. 10B illustrate microphone beamforming of an electronic device according to various embodiments.
FIG. 11 is a flowchart illustrating a method for configuring an extended display of an electronic device according to various embodiments.

### [Mode for the Invention]

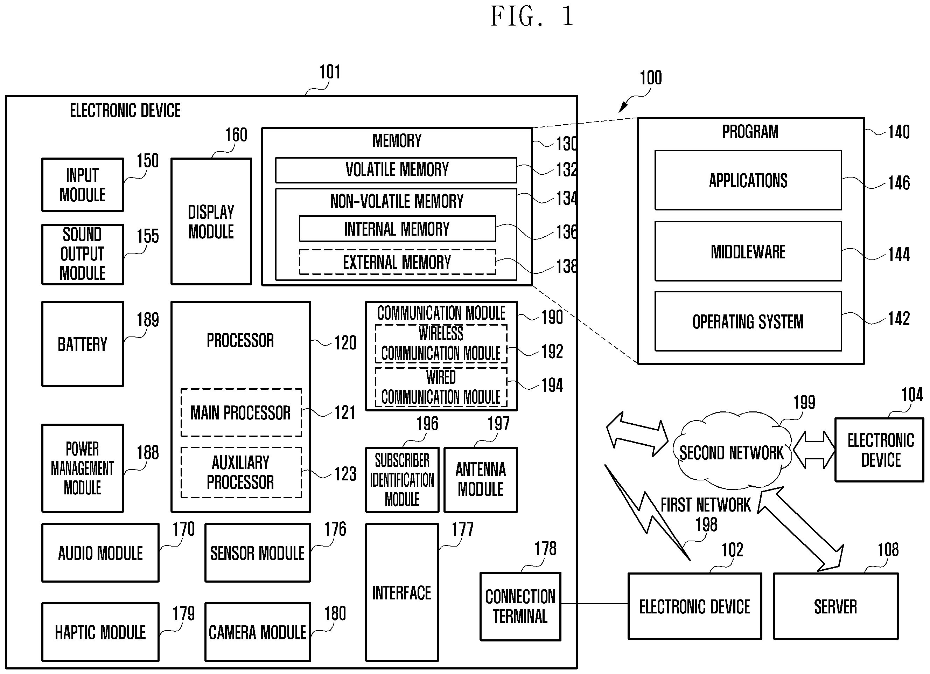

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

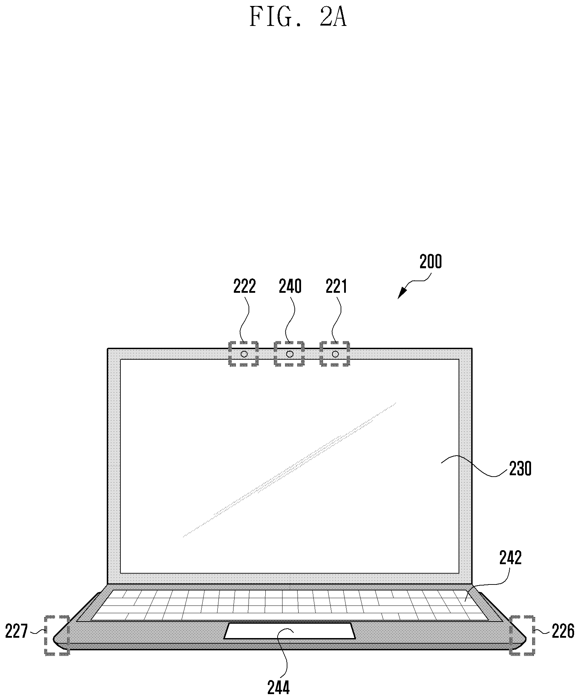

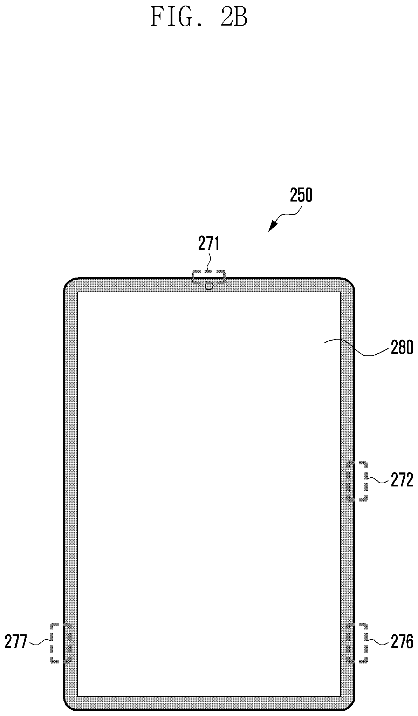

FIG. 2A and FIG. 2B illustrate an example of an electronic device according to various embodiments.

According to various embodiments, the electronic device may be a device including a display (e.g., the display module 160 in FIG. 1) and having a wireless communication function. A laptop personal computer (PC) will be described as an example of the electronic device in FIG. 2A, and a tablet PC will be described as another example of the electronic device in FIG. 2B, but the electronic device of this document is not limited thereto.

Referring to FIG. 2A, the electronic device 200 (laptop PC) may include a display housing and a main body housing. The display housing may include a display 230, and may be rotatably coupled with the main body housing such that the display 230 is exposed to the outside in an open state and such that the display 230 is hidden inside in a closed state. Various components such as a processor, a memory, a wireless communication circuit, a radio frequency front end (RFFE) module, an antenna, and a battery may be disposed inside the main body housing, and at least some of them may be mounted on a printed circuit board (PCB) and electrically connected to each other. A keyboard 242 and a touch pad 244 among the components included in the main body housing may be exposed to the top of the main body housing so as to receive a user input.

According to various embodiments, the electronic device 200 may include one or more microphones 221 and 222, and the respective microphones 221 and 222 may be disposed to be spaced apart from each other. The electronic device 200 may include two microphones (e.g., a first microphone 221 and a second microphone 222), and referring to FIG. 2A, the first microphone 221 and the second microphone 222 may be respectively disposed on the left and right sides of a camera 240 at the top of the display 230. The first microphone 221 and the second microphone 222 may be disposed in holes formed on the display housing, and may recognize external sounds. The positions of the microphones are not limited to the example in FIG. 2A, and the microphones may be disposed at other positions, such as between the top of the keyboard 242 of the main body housing and the display 230.

According to various embodiments, the electronic device 200 may include one or more speakers 226 and 227. Referring to FIG. 2A, the electronic device 200 may have the speakers 226 and 227 disposed at the left and right sides of the main body housing. The number and/or positions of the speakers are not limited thereto, and for example, a single speaker may be disposed at the bottom of the main body housing of the electronic device 200.

Referring to FIG. 2B, the electronic device 250 (tablet PC) may include a display 280 on the front face. The electronic device 250 may include one or more microphones 271 and 272, and for example, a first microphone 271 may be disposed in an upper edge area of the display 280, and a second microphone 272 may be disposed in a left side edge area of the display 280. The electronic device 250 may include one or more speakers 276 and 277, and for example, the speakers 276 and 277 may be disposed in left and right edge areas of the display 280, respectively. The number and/or positions of the microphones 271 and 272 and speakers 276 and 277 are not limited thereto.

In this document, a primary device (or source device) that produces image data when providing an extended display function will be referred to as a first electronic device or an electronic device, and a secondary device (or sink device) that receives and displays an extended screen from the primary device will be referred to as a second electronic device or an external device. The first electronic device and the second electronic device may be implemented as the electronic device 200 in FIG. 2A or the electronic device 250 in FIG. 2B, respectively, and one device may operate as the first electronic device or the second electronic device depending on the usage scenario.

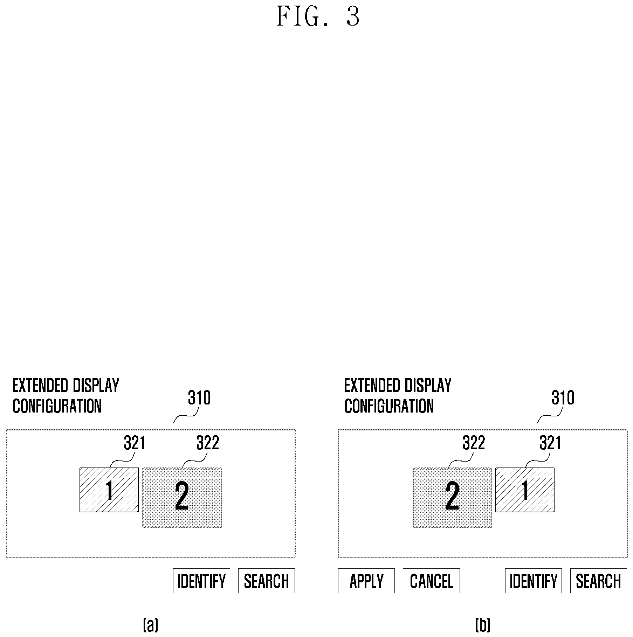

FIG. 3 illustrates an example of an extended display configuration screen according to various embodiments.

According to various embodiments, an electronic device (e.g., the electronic device 200 in FIG. 2A) may provide a multi-display function. The electronic device may transmit image data produced by the electronic device to an external device (e.g., the electronic device 250 in FIG. 2B) connected through wired or wireless communication, and the transmitted image may be displayed on a display of the external device. For example, the electronic device may transmit image data to the external device through a scheme of Wi-Fi direct (or Wi-Fi peer to peer), and, in addition thereto, various short-range wireless communication schemes such as Bluetooth, IrDA (infrared data association), Zigbee, or HomeRF may be used. According to another embodiment, the electronic device may transmit image data to the external device through a wired interface (e.g., high-definition multimedia interface (HDMI) or digital visual interface (DVI)). Hereinafter, although a description will be made based on an example in which the electronic device is wirelessly connected to the external device through Wi-Fi direct, other wired or wireless interfaces described above may be used.

According to various embodiments, the multi-display function may include a duplicate display or extended display function. Here, the duplicate display function may be a function in which the same screen displayed on a display (e.g., the display 230 in FIG. 2A) of the electronic device is displayed on a display (e.g., the display 280 in FIG. 2B) of the external device. The extended display function may be a function in which a screen is divided into a first screen to be displayed on the display (e.g., the display 230 in FIG. 2A) of an electronic device and a second screen to be displayed on the display (e.g., the display 280 in FIG. 2B) of the external device, and then displayed on the respective displays. For example, when providing a home screen, some of the icons may be disposed on the first screen and the remaining may be disposed on the second screen, and a mouse cursor may move continuously from the first screen to the second screen (or vice versa) according to the user's manipulation of the mouse so that the icon is selected. When using the extended display function, the external device may be disposed at the top, bottom, left, or right of the electronic device, and the electronic device, depending on the disposed position of the external device, may produce a first screen and display the same on the display of the electronic device, and produce a second screen and transmit the same to the external device.

According to various embodiments, the user may configure the positions of the first screen 321 to be displayed on the electronic device and the screen 322 to be displayed on the external device through a user interface 310 for configuring the extended display.

Referring to (a) in FIG. 3, in the case where the external device 2 is disposed on the left side of the electronic device 1, a screen may be configured to have the first screen 321 to be displayed on the electronic device and the second screen 322 to be displayed on the external device, which are connected such that the first screen 321 is disposed on the right side and the second screen 322 is disposed on the left side. Referring to (b) in FIG. 3, in the case where the external device 2 is disposed on the right side of the electronic device 1, a screen may be configured to have the first screen 321 to be displayed on the electronic device and the second screen 322 to be displayed on the external device, which are connected such that the first screen 321 is disposed on the left side and the second screen 322 is disposed on the right side.

According to an embodiment, if the electronic device has an extended display function activated and is connected to the external device via a wireless connection (e.g., Wi-Fi Direct), the electronic device may provide a user interface 310 capable of configuring the screen positions of the electronic device and the external device. The user may select, through the user interface 310, whether to display the first screen 321 to be displayed on the electronic device and the second screen 322 to be displayed on the external device from the left to the right or from the right to the left depending on the position of the external device, and if the position of the external device is to be changed thereafter, the arrangement of the respective screens may be changed through the user interface 310 as well.

As described above, if the user selects the arrangement of the screens to be displayed on the electronic device and external device in the extended display function through the user interface 310, it takes time for the configuration process and reconfiguration is required when the position of the external device varies, and if the user fails to define the positions according to the actual positions, it may cause inconvenience when moving the mouse cursor and the window. According to various embodiments described below, when providing the extended display function, the position of the external device may be automatically recognized without the user's manipulation through the audio output of the speakers of the electronic device and the external device and the audio recognition of the microphones thereof without the user's configuring through the user interface 310.

Hereinafter, the configurations and functions of the first electronic device and the second electronic device will be described, and the same electronic device may operate as the first electronic device or the second electronic device depending on the usage scenario. For example, in the case where a user wishes to display a portion of a screen produced by device A (e.g., the laptop PC 200 in FIG. 2A) on device B (e.g., the tablet PC 250 in FIG. 2B) through an extended display function while using device A and device B, device A may become the first electronic device and device B may become the second electronic device. On the other hand, if the user wishes to display a portion of a screen produced by device B on device A through an extended display function, device B may become the first electronic device and device A may become the second electronic device. In this document, the first electronic device may be defined as the electronic device and the second electronic device may be defined as the external device.

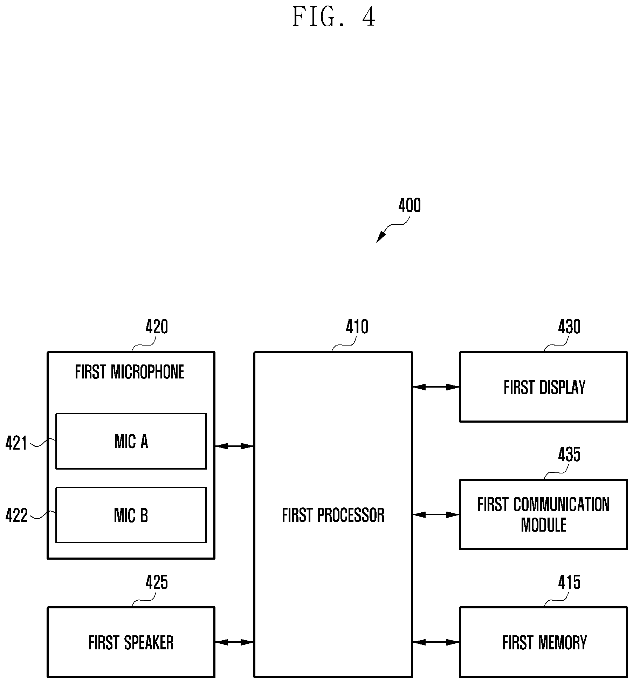

FIG. 4 is a block diagram of a first electronic device 400 according to various embodiments.

Referring to FIG. 4, the first electronic device 400 may include at least one first microphone 420, a first speaker 425, a first display 430, a first communication module 435, a first processor 410, and a first memory 415, and even if some of the illustrated configurations are omitted or replaced, various embodiments of the present document may be implemented. The first electronic device 400 may be implemented as the electronic device 200 (e.g., a laptop PC) in FIG. 2A or the electronic device 250 (e.g., a tablet PC) in FIG. 2B, but is not limited thereto. The first electronic device 400 may further include at least some of the configurations and/or functions of the electronic device 101 in FIG. 1.

According to various embodiments, the first electronic device 400 may include at least one first microphone 420. The first microphone 420 may collect external sound, convert it into a digital signal, and transmit it to the first processor 410. The first electronic device 400 may include two microphones, MIC A 421 and MIC B 422, and MIC A 421 and MIC B 422 may be disposed to be spaced apart from each other. Since two microphones (e.g., MIC A 421 and MIC B 422) are disposed to be spaced apart from each other, the recognition time and/or magnitude of sound received from a specific direction may differ between MIC A 421 and MIC B 422. MIC A 421 and MIC B 422, as described with reference to FIG. 2A, may be disposed adjacent to the hole formed in a housing (e.g., the display housing) at the top of the display, but the position and/or arrangement is not limited thereto.

According to various embodiments, the first speaker 425 may output sound to the outside, based on sound data received from the first processor 410. The first electronic device 400 may include one or more speakers, and the speakers may be disposed to be spaced apart from each other, for example, on the left and right sides of the main body housing. According to various embodiments, the sound output through the first speaker 425 may be a signal in an audible range (e.g., 100 to 17 kHz) or a signal in an inaudible range (e.g., 17 kHz or higher), which is unable be recognized by the user. The first speaker 425 may include at least some of the configurations and/or functions of the sound output module 155 in FIG. 1.

According to various embodiments, the first display 430 may display images provided from the first processor 410. For example, the first display 430 may be implemented as one of a liquid crystal display (LCD), a light-emitting diode (LED) display, an organic light-emitting diode (OLED) display, a micro-electro mechanical systems (MEMS) display, or an electronic paper display, but is not limited thereto. The first display 430 may include a touch screen that detects a user's touch input. The first display 430 may include at least some of the configurations and/or functions of the display module 160 in FIG. 1.

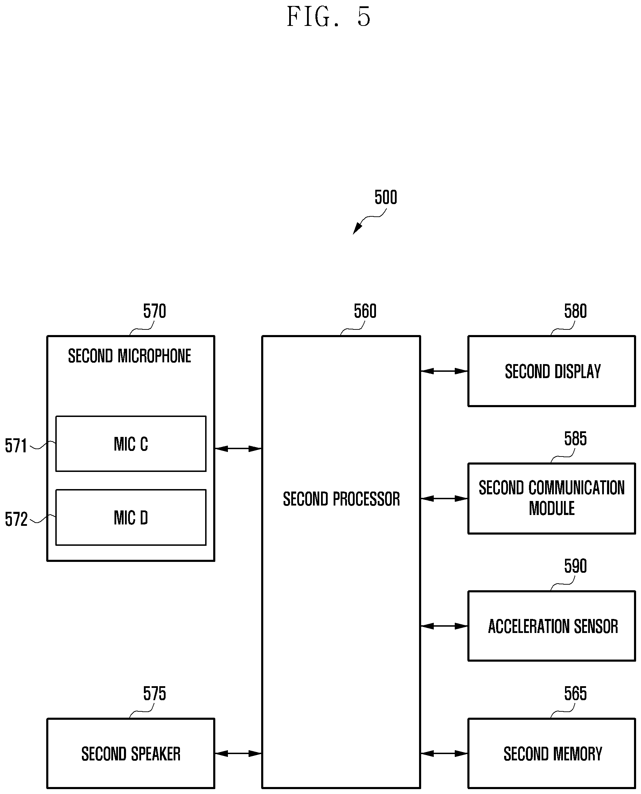

According to various embodiments, when the extended display function is executed, the first display 430 may display a first screen, which is a portion of the screen produced by the first electronic device 400. The first screen may include a background image, icons, and/or windows of a portion of the entire screen, and may be connected to the second screen to be displayed on the second electronic device (e.g., the second electronic device 500 in FIG. 5) at the top, bottom, left, or right side thereof.

According to various embodiments, the first communication module 435 is intended to wirelessly transmit and receive data to and from an external device (e.g., the second electronic device 500), and may include various circuit configurations such as a modem and a radio frequency front end (RFFE) module for performing wireless communication. The first communication module 435 may support short-range wireless communication such as Wi-Fi, and may also support short-range wireless communication standards or non-standard technologies such as Bluetooth, IrDA (infrared data association), Zigbee, and HomeRF. The first communication module 435 may include at least some of the configurations and/or functions of the communication module 190 in FIG. 1.

According to various embodiments, the first memory 415 may include known volatile memory and non-volatile memory. The first memory 415 may store various instructions executable in the processor. Such instructions may include control commands such as arithmetic and logical operations, data transfer, and input/output, which may be recognized by the first processor 410. The first memory 415 may include at least some of the configurations and/or functions of the memory 130 in FIG. 1, and may store at least some of the programs 140 in FIG. 1.

According to various embodiments, the first processor 410 is able to perform operations or data processing related to control and/or communication of respective components of the first electronic device 400, and may include at least some of the configurations of the processor 120 in FIG. 1. The first processor 410 may be operatively, electrically, and/or functionally connected to internal components of the first electronic device 400, such as the first display 430, the first memory 415, the first microphone 420, the first speaker 425, and the first communication module 435.

According to various embodiments, although the operation and data processing functions that can be implemented by the first processor 410 in the first electronic device 400 are not limited, various embodiments for recognizing an external device (or the second electronic device 500) and providing an extended display function will be described in this document. The operation of the first processor, which will be described later, may be performed by executing instructions stored in the first memory 415.

According to various embodiments, the first electronic device 400 may provide an extended display function. The extended display function may be a function of dividing a screen into a first screen to be displayed on the display of the first electronic device 400 and a second screen to be displayed on the display of the second electronic device (or external device) and displaying the same on the respective displays. The user may dispose a second electronic device 500 at a position on the top, bottom, left, or right of the first electronic device 400, and the first electronic device 400 may recognize the position of the second electronic device 500 according to the embodiment described below.

According to various embodiments, the first processor 410 may activate the extended display function, based on a user input. For example, the first processor 410 may activate the extended display function in response to a user input to an execution icon (or menu) of the extended display function using a keyboard, mouse, or touch screen, or a shortcut key input of the keyboard.

According to various embodiments, if the extended display function is executed, the first electronic device 400 may scan an external device capable of being connected wirelessly using the first communication module 435 and establish a short-range wireless communication connection with the selected external device (e.g., the second electronic device). At this time, the second electronic device may also have a second screen function activated.

According to various embodiments, the first electronic device 400 may establish a short-range wireless communication connection with the second electronic device through Wi-Fi direct technology (Wi-Fi direct or Wi-Fi P2P) (hereinafter referred to as WFD). The WFD technology is a technology for providing a direct connection between multiple electronic devices by utilizing existing Wi-Fi interfaces, and may provide a direct connection between the first electronic device 400 and the second electronic device without an access point (AP) that is a medium of an infrastructure network. The first electronic device 400 and the second electronic device may establish a connection according to a WFD-related protocol defined in the IEEE 802.11 technology standard (e.g., IEEE 802.11g, IEEE 802.11n, etc.).

According to various embodiments, the first electronic device 400 and the second electronic device may transmit and receive data related to recognition of the position of a device and produced screen data through the established short-range wireless communication connection (e.g., WFD connection).

According to various embodiments, the first electronic device 400 may identify the position (e.g., left or right) of the second electronic device to provide an extended display function. According to various embodiments, the first electronic device 400 and/or the second electronic device may identify their positions relative to each other by recognizing a sound output from another device. Hereinafter, two embodiments for the first electronic device 400 to recognize the position of the second electronic device will be described, and both the first embodiment and the second embodiment described below may be implemented by the first electronic device 400.

### [First embodiment]

The first embodiment shows that a sound output from the second electronic device is recognized through at least one microphone 420 of the first electronic device 400 to recognize the position of the second electronic device.

According to the first embodiment, the first processor 410 may transmit a sound output request to the second electronic device through a short-range wireless communication connection established between the first communication module 435 and the second electronic device (e.g., the second communication module 585 in FIG. 5). The second electronic device may output a predetermined sound in response to the sound output request. According to another embodiment, the second electronic device may be configured to output a predetermined sound in the state where a second screen function is activated and where a WFD connection is established with the first electronic device 400, and in this case, the operation of transmitting the sound output request from the first electronic device 400 to the second electronic device may be omitted.

According to an embodiment, the second electronic device may output a sound in an inaudible range (e.g., 17 kHz). A sound in the inaudible range cannot be perceived by a human, but may be recognized through a microphone. According to another embodiment, the second electronic device may output a predetermined sound in an audible range. For example, the second electronic device may output a notification sound or melody indicating that recognition of the current position is in progress.

According to an embodiment, the first processor 410 may activate at least one first microphone 420. For example, the first electronic device 400 may include two microphones, MIC A 421 and MIC B 422, which are spaced apart from each other. The first microphone 420 (MIC A 421 and MIC B 422) may recognize a sound in an inaudible range or a notification sound in an audible range output from the second electronic device.

According to an embodiment, the first electronic device 400 may form receiving beams of MIC A 421 and MIC B 422 using beamforming technology in order to recognize a sound output from the second electronic device. For example, MIC A 421 and MIC B 422 may be spaced apart from each other at the top of the first display 430, and may form receiving beams toward the front in order to recognize a user's voice during normal times. If the extended display function is executed, since the second external device is disposed on the side of the first electronic device 400, the first electronic device 400 may move the position of the receiving beam to the left or right in order to recognize sounds on the left and right sides more loudly. According to an embodiment, the first electronic device 400 may sweep the positions of the receiving beams of MIC A 421 and MIC B 422 from left to right or from right to left at a predetermined time interval. In this case, the position of the second electronic device may be identified based on the sound signals respectively obtained from MIC A 421 and MIC B 422 in the case where the magnitude of sound is larger, among the cases where the receiving beam is formed to the left and the right. According to another embodiment, the first electronic device 400 may form a receiving beam to the left for MIC A 421 disposed on the left, and may form a receiving beam to the right for MIC B 422 disposed on the right.

According to an embodiment, the first processor 410 may identify the position of the second electronic device, based on sound signals recognized through the first microphone 420 (e.g., a first sound signal recognized from MIC A 421 and a second sound signal recognized from MIC B 422). According to an embodiment, the first processor 410 may identify the position of the second electronic device, based on the recognition time and/or volume of the sounds recognized through the respective microphones 421 and 422. For example, in the case where the second electronic device is disposed on the left side of the first electronic device 400, the sound output from the second electronic device may be recognized earlier by MIC A 421 disposed on the left side than MIC B 422 disposed on the right side, and the magnitude of the sound detected by MIC A 421 may be greater than the magnitude of the sound detected by MIC B 422. On the other hand, in the case where the second electronic device is disposed on the right side of the first electronic device 400, the sound output from the second electronic device may be recognized earlier by MIC B 422 than MIC A 421, and the magnitude of the sound detected by MIC B 422 may be greater than the magnitude of the sound detected by MIC A 421. The first processor 410 may calculate the difference in the recognition time and/or volume of the sound from the first sound signal transmitted from MIC A 421 and the second sound signal transmitted from MIC B 422 and identify whether the second electronic device is positioned on the left side or right side according thereto.

According to an embodiment, if the position of the second electronic device is identified, the first processor 410 may stop detecting through the first microphone 420. In addition, the second electronic device may stop outputting the sound.

According to an embodiment, the first processor 410 may configure the screen of the currently running application into a first screen and a second screen according to the identified position of the second electronic device. Here, the first screen is a screen displayed on the first display 430 of the first electronic device 400, and the second screen may be a screen displayed on the second electronic device, and the first screen and the second screen may be connected to each other. For example, if the first electronic device 400 is disposed on the left side and if the second electronic device is disposed on the right side, the first screen may include a portion of the left part of the entire screen, and the second screen may include a portion of the right part.

According to an embodiment, the first processor 410 may display the produced first screen on the first display 430 and transmit the produced second screen to the second electronic device through the first communication module 435. The first screen and the second screen may be displayed in synchronization with each other, and the mouse cursor, window, or the like may be moved from the first screen to the second screen (or vice versa) according to a user input.

### [Second embodiment]

The second embodiment shows that the sound output from the first electronic device 400 is recognized through at least one microphone of the second electronic device, thereby recognizing the position of the second electronic device.

According to the second embodiment, the first processor 410 may transmit a microphone activation request to the second electronic device through a short-range wireless communication connection established between the first communication module 435 and the second electronic device. The second electronic device, in response to the request, may activate at least one microphone (e.g., MIC C 571 and MIC D 572 in FIG. 5) and transmit the activation result to the first electronic device 400.

According to an embodiment, the first processor 410 may output a sound signal using the first speaker 425. For example, the sound output from the first speaker 425 may be a sound in an inaudible range or a sound in an audible range, such as a notification sound.

According to an embodiment, the second electronic device may recognize the sound output from the first electronic device 400 through the respective microphones (e.g., MIC C 571 and MIC D 572) and identify the position of the second electronic device, based on the recognition time and/or volume of the recognized sound.

According to an embodiment, the second electronic device may transmit the position recognition result to the first electronic device 400. The first processor 410 may identify the position of the second electronic device, based on the received information. The first processor 410 may configure the screen of the currently running application into a first screen and a second screen according to the identified position of the second electronic device. The first processor 410 may display the produced first screen through the first display 430 and transmit the produced second screen to the second electronic device through the first communication module 435.

According to various embodiments, during the execution of an operation of recognizing the position of the second electronic device, the first processor 410 may display a user interface (UI) indicating the same on the first display 430.

According to various embodiments, the first processor 410 may perform an operation of recognizing the position of the second electronic device for a predetermined period of time (e.g., 10 seconds). According to various embodiments, if the position of the second electronic device is not recognized for the predetermined period of time, the first processor 410 may output a notification instructing the user to change the position of the second electronic device on the first display 430. If the user places the second electronic device far away or places the speaker (or microphone) of the second electronic device far away from the first microphone 420 (or the first speaker 425), the first microphone 420 may fail to accurately recognize the sound, and in this case, the notification may be output to induce the user to adjust the position of the second electronic device. The first processor 410 may output the notification again if the position of the second electronic device is not recognized for a predetermined time after outputting the notification.

According to various embodiments, if the number of times the position of the second electronic device fails to be recognized exceeds a predetermined value (e.g., 3 times) after the first processor 410 outputs the notification, the first processor 410 may determine that recognition was failure and ask the user to manually configure the position of the second electronic device. For example, the first processor 410 may provide a user interface (e.g., the user interface 310 in FIG. 3) capable of configuring the screen positions of the first electronic device 400 and the second electronic device. The user may select, through the user interface, whether to display the first screen to be displayed on the first electronic device 400 and the second screen to be displayed on the second electronic device from left to right or from right to left depending on the position where the second electronic device is disposed.

FIG. 5 is a block diagram of a second electronic device according to various embodiments.

Referring to FIG. 5, a second electronic device 500 may include at least one second microphone 570, a second speaker 575, a second display 580, a second communication module 585, an acceleration sensor 590, a second processor 560, and a second memory 565, and even if some of the illustrated configurations are omitted or replaced, various embodiments of the this document may be implemented. The second electronic device 500 may be the same type of device as the first electronic device 400, and one device may operate as the first electronic device or the second electronic device 500 depending on the usage scenario.

Some of the configurations and/or functions of the second microphone 570, the second speaker 575, the second display 580, the second communication module 585, the second processor 560, and the second memory 565 in the configurations shown in FIG. 5 may be the same as the configurations and/or functions of the first microphone 420, the first speaker 425, the first display 430, the first communication module 435, the first processor 410, and the first memory 415, so redundant descriptions of the same configurations and/or functions will be omitted. Hereinafter, the operation of the second electronic device 500 to identify the position of the second electronic device 500 when an extended display function is activated using the second display 580 of the second electronic device 500 in the first electronic device will be described.

According to various embodiments, the second processor 560 may activate a second screen function, based on a user input. The second screen function may be a function of displaying a screen transmitted from an external device (e.g., the first electronic device 400 in FIG. 4) executing an extended display function on the second display 580.

According to various embodiments, if the second screen function is activated, the second processor 560 may activate short-range wireless communication (e.g., WFD) through the second communication module 585 and establish a short-range wireless communication connection with the first electronic device.

According to various embodiments, the first electronic device may identify the position (e.g., left or right) of the second electronic device 500 in order to provide the extended display function, and the second electronic device 500 may perform the following operation according to a request of the first electronic device and/or pre-configuration.

### [First embodiment]

The first embodiment shows that the sound output from the second speaker 575 of the second electronic device 500 is recognized through at least one microphone of the first electronic device, thereby recognizing the position of the second electronic device 500.

According to the first embodiment, the second electronic device 500 may receive a sound output request from the first electronic device using the second communication module 585.

According to an embodiment, the second processor 560, in response to the sound output request, may output a predetermined sound using the second speaker 575. For example, the second speaker 575 may output a sound in the inaudible range or a sound in the audible range including a notification sound or melody indicating that recognition of the current position is in progress.

According to an embodiment, the first electronic device may recognize the sound output from the second speaker 575 using at least one microphone (e.g., MIC A 421 and MIC B 422 in FIG. 4) and identify the position of the second electronic device 500, based on the sound recognized by each microphone.

According to an embodiment, if the position of the second electronic device 500 is recognized, the first electronic device may transmit the position recognition result to the second electronic device 500, and the second processor 560 may stop outputting sound through the second speaker 575 in response to the identification of the position recognition result.

According to an embodiment, the second electronic device 500 may receive a second screen produced by the first electronic device through the second communication module 585 and display the same on the second display 580.

### [Second embodiment]

The second embodiment shows that the sound output from the first electronic device is recognized through at least one microphone of the second electronic device 500, thereby recognizing the position of the second electronic device 500.

According to the second embodiment, the first electronic device may transmit a microphone activation request to the second electronic device 500 through a short-range wireless communication connection. The second processor 560, in response to the request received through the second communication module 585, may activate at least one second microphone 570 (e.g., MIC C 571 and MIC D 572) and transmit the activation result to the first electronic device.

According to an embodiment, the second microphone 570 may recognize a sound output from the first electronic device and identify the position of the second electronic device 500, based on the recognition time and/or volume of the recognized sound. For example, the second processor 560 may identify the relative positions of the first electronic device and the second electronic device 500, based on the recognition time and/or volume of the sound recognized through MIC C 571 and MIC D 572.

According to an embodiment, the second processor 560 may transmit the position recognition result to the first electronic device through the second communication module 585. The second processor 560 may stop the sound recognition operation of the second microphone 570. According to an embodiment, the first electronic device may be configured to transmit a response when the position recognition result is received from the second electronic device 500, and the second processor 560 may stop the sound recognition operation of the second microphone 570 when a response to the position recognition result is received from the first electronic device. According to an embodiment, the second processor 560 may stop the sound recognition operation of the second microphone 570 in response to the transmission of the position recognition result even if a response is not received from the first electronic device.

According to an embodiment, the second electronic device 500 may receive a second screen produced by the first electronic device through the second communication module 585 and display the same on the second display 580.

According to various embodiments, the acceleration sensor 590 may identify the movement of the second electronic device 500. The second processor 560 may identify the movement distance of the second electronic device 500, based on sensing values of the acceleration sensor 590 and, if the second electronic device 500 moves a reference distance or more, transmit movement information thereof to the first electronic device through the second communication module 585. If it is identified that the second electronic device 500 has moved, the first electronic device may perform the operation of identifying the position of the second electronic device 500 according to the first embodiment or the second embodiment described above.

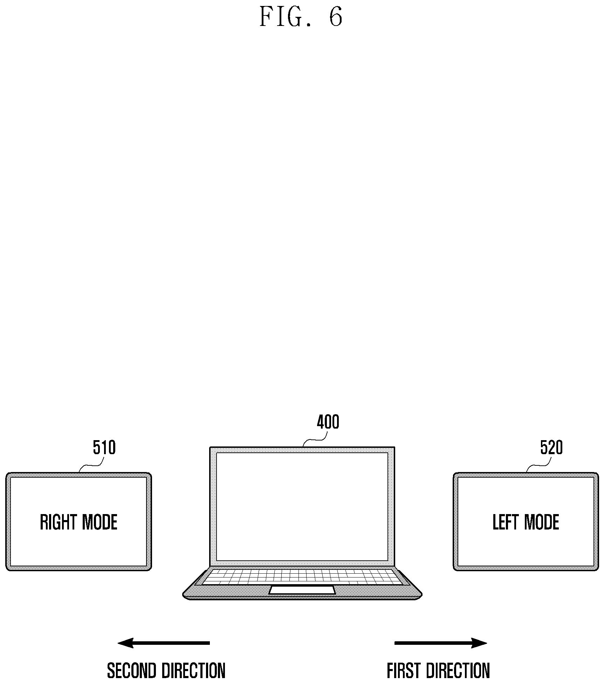

FIG. 6 illustrates operation modes depending on the positions of a first electronic device 400 and a second electronic device according to various embodiments.

Referring to FIG. 6, the user may place the second electronic device 500 (e.g., the tablet PC 250 in FIG. 2B) on the left or right side of the first electronic device 400 (e.g., the laptop PC 200 in FIG. 2A) and execute an extended display function.

According to various embodiments, when executing the extended display function, the first electronic device 400 and/or the second electronic device may recognize a sound output from the second electronic device through at least one microphone of the first electronic device 400 to recognize the position of the second electronic device (first embodiment), and/or may recognize a sound output from the first electronic device 400 through at least one microphone of the second electronic device to recognize the position of the second electronic device. (second embodiment)

According to various embodiments, if the second electronic device is recognized as being disposed in a second direction from the first electronic device 400 (e.g., on the right side of the first electronic device 400), the first electronic device 400 may recognize that the relative position of the second electronic device is in the first direction (or on the right) and configure a first screen and a second screen in a right mode 510. For example, a portion of the left area of the entire screen may be configured as a first screen to be displayed on the first electronic device 400, and a portion of the remaining right area may be configured as a second screen to be displayed on the second electronic device.

According to various embodiments, if the second electronic device is recognized as being disposed in a first direction from the first electronic device 400 (e.g., on the left side of the first electronic device 400), the first electronic device 400 may recognize that the relative position of the second electronic device is in the second direction (or on the left) and configure a first screen and a second screen in a left mode 520. For example, a portion of the right area of the entire screen may be configured as a first screen to be displayed on the first electronic device 400, and a portion of the remaining left area may be configured as a second screen to be displayed on the second electronic device.

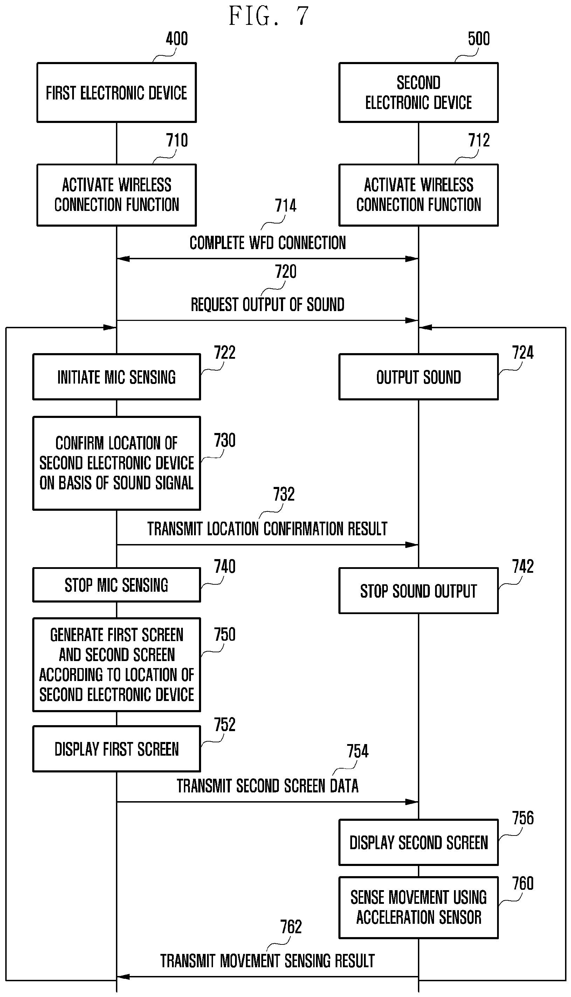

FIG. 7 is a flowchart illustrating a method for configuring an extended display of an electronic device according to various embodiments.

The embodiment of FIG. 7 may include a method of recognizing the position of the second electronic device 500 according to the first embodiment described above. The method illustrated in FIG. 7 may be performed by the first electronic device 400 (e.g., the electronic device 400 in FIG. 4) and the second electronic device 500 (e.g., the electronic device 500 in FIG. 5) described above, and the description of the technical features described above will be omitted below.

According to various embodiments, in operation 710, the first electronic device 400 may activate a short-range wireless communication connection function if an extended display function is activated based on a user input. Here, the short-range wireless communication may be Wi-Fi direct (hereinafter, WFD), but is not limited thereto.

According to various embodiments, in operation 712, the second electronic device 500 may activate a short-range wireless communication connection function if a second screen function is activated based on a user input.

According to various embodiments, in operation 714, the first electronic device 400 and the second electronic device 500 may establish a short-range wireless communication connection (e.g., a WFD connection). For example, if the short-range wireless communication connection function of the first electronic device 400 and the second electronic device 500 is activated, a channel may be established by scanning and recognizing the counterpart device. The first electronic device 400 and the second electronic device 500 may transmit and receive data related to position recognition of the counterpart device and produced screen data through the established short-range wireless communication connection (e.g., WFD connection).

According to various embodiments, in operation 720, the first electronic device 400 may transmit a sound output request to the second electronic device 500 through the short-range wireless communication connection. According to an embodiment, the second electronic device 500 may be configured to output a predetermined sound if the second screen function is activated and if a WFD connection is established with the first electronic device 400, and in this case, operation 720 may be omitted.

According to various embodiments, in operation 722, the first electronic device 400 may initiate a detecting operation of the microphone. The first electronic device 400 may include one or more microphones (e.g., MIC A 421 and MIC B 422 in FIG. 4), and the respective microphones may be disposed to be spaced apart from each other. The first electronic device 400 may monitor a predetermined sound through the microphones. According to an embodiment, the first electronic device 400 may form receiving beams of MIC A 421 and MIC B 422 using beamforming technology in order to recognize a sound output from the second electronic device 500 disposed on the left or right side of the first electronic device 400.

According to various embodiments, in operation 724, the second electronic device 500 may output a predetermined sound. For example, the second electronic device 500 may output a sound in the inaudible range or a predetermined sound in the audible range (e.g., a notification sound or melody indicating that a position recognition operation is in progress).

According to various embodiments, in operation 730, the first electronic device 400 may identify the position of the second electronic device 500, based on a sound signal recognized through at least one microphone (e.g., a first sound signal recognized by MIC A 421 and a second sound signal recognized by MIC B 422). According to an embodiment, the first electronic device 400 may identify the position of the second electronic device 500, based on the recognition time and/or volume of the sound recognized through each microphone. For example, in the case where the second electronic device 500 is disposed on the left side of the first electronic device 400, the sound output from the second electronic device 500 may be recognized earlier by MIC A disposed on the left side than MIC B disposed on the right side, and the magnitude of the sound detected by MIC A may be greater than the magnitude of the sound detected by MIC B. On the other hand, in the case where the second electronic device 500 is disposed on the right side of the first electronic device 400, the sound output from the second electronic device 500 may be recognized earlier by MIC B than MIC A, and the magnitude of the sound detected by MIC B may be greater than the magnitude of the sound detected by MIC A. The first processor may calculate the difference in the recognition time and/or volume of the sound from the first sound signal transmitted from MIC A and the second sound signal transmitted from MIC B and identify whether the second electronic device 500 is positioned on the left side or right side according thereto.

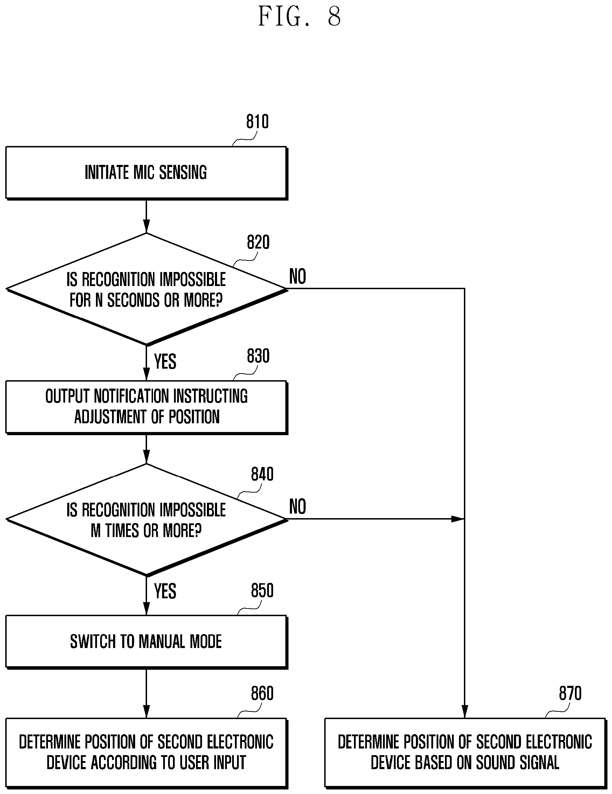

According to various embodiments, in operation 732, the first electronic device 400 may transmit the position identification result. An operation in the case where the position is not identified as a result of performing operations 722 to 730 will be described with reference to FIG. 8.

According to various embodiments, if the position of the second electronic device 500 is identified, the first electronic device 400 may stop detecting sound through the microphone (e.g., MIC A 421 and MIC B 422) in operation 740.

According to various embodiments, if the position identification result is received, the second electronic device 500 may stop outputting sound through the speaker (e.g., the second speaker 575) in operation 742.

According to various embodiments, in operation 750, the first electronic device 400 may configure the screen of the currently running application into a first screen and a second screen according to the identified position of the second electronic device 500. For example, if it is identified that the first electronic device 400 is disposed on the left side (or in the first direction) and that the second electronic device 500 is positioned on the right side (in the second direction) (e.g., in the right mode in FIG. 6), the first screen may include a portion of the left area of the entire screen and the second screen may include a portion of the right area.

According to various embodiments, in operation 752, the first electronic device 400 may display the produced first screen through the display (e.g., the first display 430 in FIG. 4) of the first electronic device 400.

According to various embodiments, in operation 754, the first electronic device 400 may transmit the produced second screen data to the second electronic device 500. In operation 756, the second electronic device 500, based on the received second screen data, may display the second screen through the display (e.g., the second display 580 in FIG. 5) of the second electronic device 500. The first screen and the second screen may be displayed in synchronization with each other, and the mouse cursor, window, etc. may move from the first screen to the second screen (or vice versa) according to a user input.

According to various embodiments, in the state where the first electronic device 400 and the second electronic device 500 display the first screen and the second screen, respectively, according to the extended display function, the second electronic device 500 may detect the movement of the second electronic device 500 using an acceleration sensor (e.g., the acceleration sensor 590 in FIG. 5). The second electronic device 500 may identify the movement distance of the second electronic device 500, based on sensing values of the acceleration sensor, and, if the second electronic device 500 moves a reference distance or more, identify the movement of the second electronic device 500 in operation 760, and transmit the movement detecting result to the first electronic device 400 in operation 762.

According to various embodiments, if it is identified that the second electronic device 500 has moved, the first electronic device 400 and the second electronic device 500 may return to operations 720 to 724 and perform operations of recognizing the position of the second electronic device 500 again.

FIG. 8 is a flowchart illustrating the operation of an electronic device when the position of an external device is not recognized according to various embodiments.

The method shown in FIG. 8 may be performed by the first electronic device (e.g., the electronic device 400 in FIG. 4) described above, and the description of the technical features described above will be omitted below.

According to various embodiments, in operation 810, the first electronic device may activate one or more microphones (e.g., MIC A 421 and MIC B 422 in FIG. 4) to detect a sound output from the second electronic device. The first electronic device may detect a sound output from the second electronic device using the microphones for a predetermined time of n seconds (e.g., 10 seconds) and perform an operation of recognizing the position of the second electronic device.

According to various embodiments, if the position of the second electronic device is not recognized for a predetermined time (n seconds) in operation 820, the first electronic device may output, to the display (e.g., the first display 430 in FIG. 4) of the first electronic device, a notification instructing the user to adjust the position of the second electronic device in operation 830. If the user places the second electronic device far away or places the speaker of the second electronic device far away from the microphone of the first electronic device, the microphone may fail to accurately recognize the sound, and in this case, the notification may be output to induce the user to adjust the position of the second electronic device. On the other hand, if the position of the second electronic device is recognized within a predetermined time in operation 820, the position of the second electronic device may be determined based on the recognized sound signal in operation 870.

According to various embodiments, the first electronic device may output the notification again if the position of the second electronic device is not recognized for a predetermined time after outputting the notification. The first electronic device may perform the recognition operation a predetermined number of times (m times) (e.g., 3 times), and if the position of the second electronic device is recognized as a result of performing the recognition operation a predetermined number of times, the position of the second electronic device may be determined based on the recognition of the sound signal in operation 870. If the position of the second electronic device is not recognized as a result of performing the recognition operation a predetermined number of times (m times) (e.g., 3 times) in operation 840, the first electronic device may determine that automatic recognition is not possible (or may switch to manual mode) in operation 850, and allow the user to manually configure the position of the second electronic device in operation 860. For example, the first processor may provide a user interface (e.g., the user interface 310 in FIG. 3) capable of configuring the screen positions of the first electronic device and the second electronic device. The user may select, through the user interface, whether to display the first screen to be displayed on the first electronic device and the second screen to be displayed on the second electronic device from left to right or from right to left depending on the position where the second electronic device is disposed.

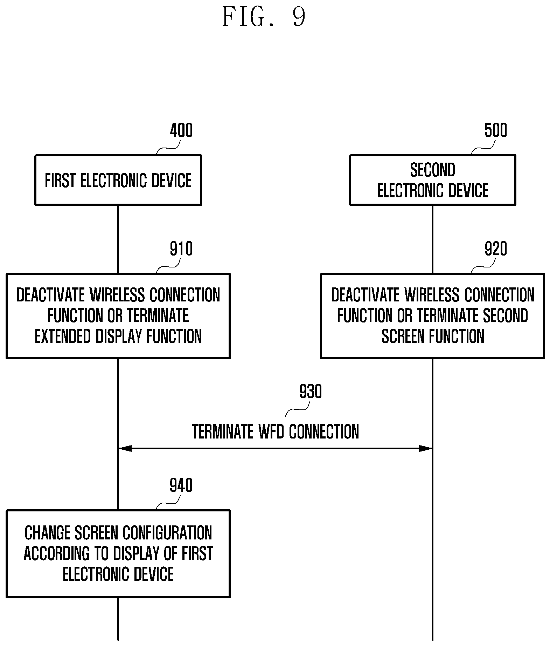

FIG. 9 is a flowchart illustrating the case where an extended display function of an electronic device is released according to various embodiments.

FIG. 9 illustrates an operation of releasing the connection according to an event occurring in the state where the first electronic device 400 and the second electronic device 500 are connected through short-range wireless communication according to the extended display function and display the first screen and the second screen, respectively. The method shown in FIG. 9 may be performed by the first electronic device 400 (e.g., the electronic device 400 in FIG. 4) and the second electronic device 500 (e.g., the electronic device 500 in FIG. 5) described above, and the description of the technical features described above will be omitted below.

According to various embodiments, in operation 910, the first electronic device 400 may identify deactivation of the short-range wireless communication connection (e.g., WFD) and/or termination of the extended display function. For example, the user may deactivate the short-range wireless communication function or terminate the extended display function through an input using the mouse, keyboard, or touch screen. Alternatively, the short-range wireless communication may be disconnected when the first electronic device 400 and the second electronic device 500 move away from each other or when the wireless communication environment changes.

According to various embodiments, in operation 920, the second electronic device 500 may identify the deactivation of the short-range wireless communication connection (e.g., WFD) and/or the termination of the second screen function.

According to various embodiments, if the short-range wireless communication connection is deactivated or the extended display function is terminated in the first electronic device 400 according to operation 910, or if the short-range wireless communication connection is deactivated or the extended display function is terminated in the second electronic device 500 according to operation 920, the first electronic device 400 and the second electronic device 500 may deactivate the established WFD connection in operation 930.

According to various embodiments, in operation 940, according to the termination of the extended display function, the first electronic device 400 may reconfigure a screen to display the entire screen on the display of the first electronic device 400 and may display the reconfigured screen on the display (e.g., the first display 430).

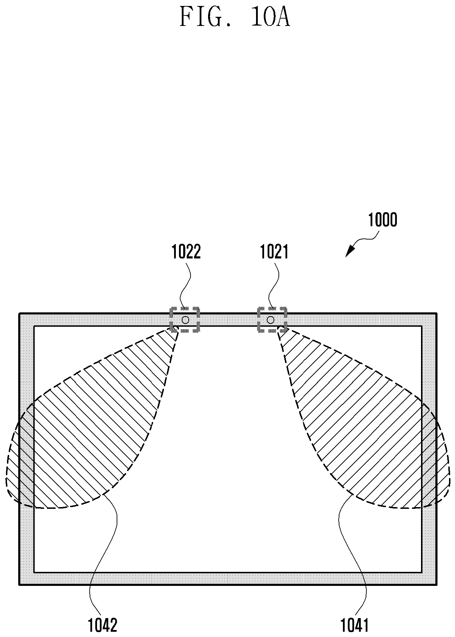

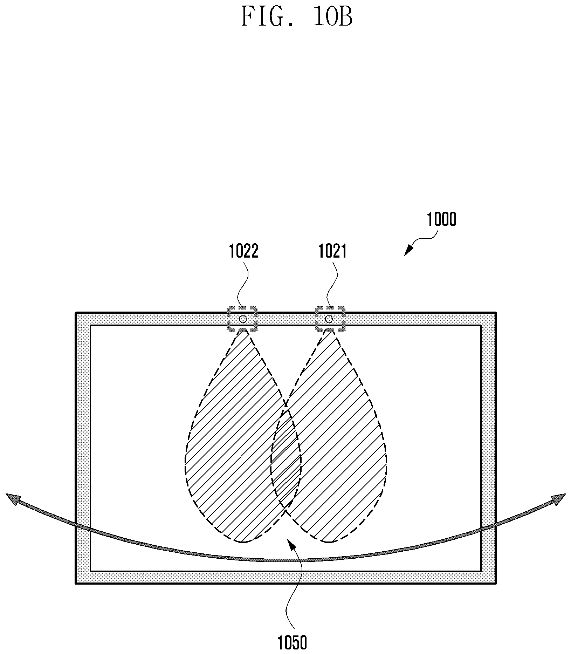

FIG. 10A and FIG. 10B illustrate microphone beamforming of an electronic device according to various embodiments

According to various embodiments, a first electronic device 1000 may recognize sound output from the second electronic device using two microphones, MIC A 1021 and MIC B 1022, which are disposed to be spaced apart from each other. According to various embodiments, the first electronic device 1000 may form receiving beams of MIC A 1021 and MIC B 1022 using beamforming technology in order to recognize sound output from the second electronic device (e.g., the second electronic device 500 in FIG. 5). For example, MIC A 1021 and MIC B 1022 may be disposed at the top of the first display so as to be spaced apart from each other, and may form receiving beams toward the front in order to recognize a user's voice during normal times and, if the extended display function is executed to recognize the sound of the second electronic device, move the positions of the receiving beams to the left or right where the second electronic device is expected to be positioned.

Referring to FIG. 10A, the first electronic device 1000 may form a receiving beam 1041 to the left from MIC A 1021 positioned on the left and form a receiving beam 1042 to the right from MIC B 1022 positioned on the right. Accordingly, in the case where the second electronic device is positioned on the left of the first electronic device 1000, MIC A 1021 may recognize more accurately the sound of the second electronic device, and in the case where the second electronic device is positioned on the right of the first electronic device 1000, MIC B 1022 may recognize more accurately the sound of the second electronic device.

Referring to FIG. 10B, the first electronic device 1000 may sweep the positions of the receiving beams 1050 of MIC A 1021 and MIC B 1022 from left to right and from right to left at predetermined time intervals. In this case, the position of the second electronic device may be identified based on the sound signals respectively obtained from MIC A 1021 and MIC B 1022 in the case where the magnitude of sound is larger, among the cases where the receiving beam 1050 is formed to the left and the right.

An electronic device 400 according to various embodiments may include a display 430, a first microphone 421, a second microphone 422 disposed to be spaced apart from the first microphone 421, a wireless communication circuit 435, and a processor 410 operatively connected to the display 430, the first microphone 421, the second microphone 422, and the wireless communication circuit 435, and the processor 410 may be configured to detect activation of an extended display 430 configuration function, establish a wireless connection with an external device using the wireless communication circuit 435, detect a sound output from the external device using the first microphone 421 and the second microphone 422, recognize a position of the external device, based on a first sound signal obtained by the first microphone 421 and a second sound signal obtained by the second microphone 422, produce a first screen to be displayed on the display 430 and a second screen to be displayed on a display 430 of the external device, based on the recognized position of the external device, display the produced first screen on the display 430, and transmit the second screen to the external device using the wireless communication circuit 435.

According to various embodiments, the first microphone 421 and the second microphone 422 may be configured to detect a predetermined sound.

According to various embodiments, the first microphone 421 and the second microphone 422 may be configured to detect a sound in an inaudible range.

According to various embodiments, the first processor 410 may be configured to recognize the position of the external device, based on at least one of a time at which the first sound signal and the second sound signal are detected or volume thereof.

According to various embodiments, the processor 410 may be configured to determine the position of the external device to be a left side or right side.

According to various embodiments, the processor 410 may be configured to terminate an operation of detecting the sound using the first microphone 421 and the second microphone 422 if the recognition of the position of the external device is completed.

According to various embodiments, the processor 410 may be configured to reactivate the first microphone 421 and the second microphone 422 and detect a sound output from the external device if movement of the external device is identified after recognizing the position of the external device.

According to various embodiments, the first screen and the second screen may be connected to each other.

According to various embodiments, the first microphone 421 and the second microphone 422 may be configured to form microphone receiving beams to the left and right of the electronic device 400 in order to recognize a sound of the external device.

According to various embodiments, the processor 410 may be configured to output a notification through the display 430 if the position of the external device is not recognized for a predetermined time.

According to various embodiments, the processor 410 may be configured to provide a user interface capable of configuring the position of the external device on the display 430 if the position of the external device is not recognized a predetermined number of times after outputting the notification.

According to various embodiments, the communication circuit 435 may be configured to establish a wireless connection with the external device using Wi-Fi direct.

A method for configuring an extended display 430 of an electronic device 400 according to various embodiments may include detecting activation of an extended display 430 configuration function, establishing a wireless connection with an external device, detecting a sound output from the external device using a first microphone 421 and a second microphone 422, recognizing a position of the external device, based on a first sound signal obtained by the first microphone 421 and a second sound signal obtained by the second microphone 422, producing a first screen to be displayed on the display 430 of the electronic device 400 and a second screen to be displayed on a display 430 of the external device, based on the recognized position of the external device, displaying the produced first screen on the display 430, and transmitting the second screen to the external device.

According to various embodiments, the detecting of the sound may include detecting a sound in an inaudible range.

According to various embodiments, the recognizing of the position of the external device may include recognizing the position of the external device, based on at least one of a time at which the first sound signal and the second sound signal are detected or volume thereof.

According to various embodiments, the recognizing of the position of the external device may include determining the position of the external device to be a left side or right side.

According to various embodiments, the method may further include terminating detecting the sound using the first microphone 421 and the second microphone 422 if the recognition of the position of the external device is completed.

According to various embodiments, the method may further include reactivating the first microphone 421 and the second microphone 422 and detecting a sound output from the external device if movement of the external device is identified after recognizing the position of the external device.

According to various embodiments, the recognizing of the sound may include forming microphone receiving beams of the first microphone 421 and the second microphone 422 to the left and right of the electronic device 400 in order to recognize a sound of the external device.

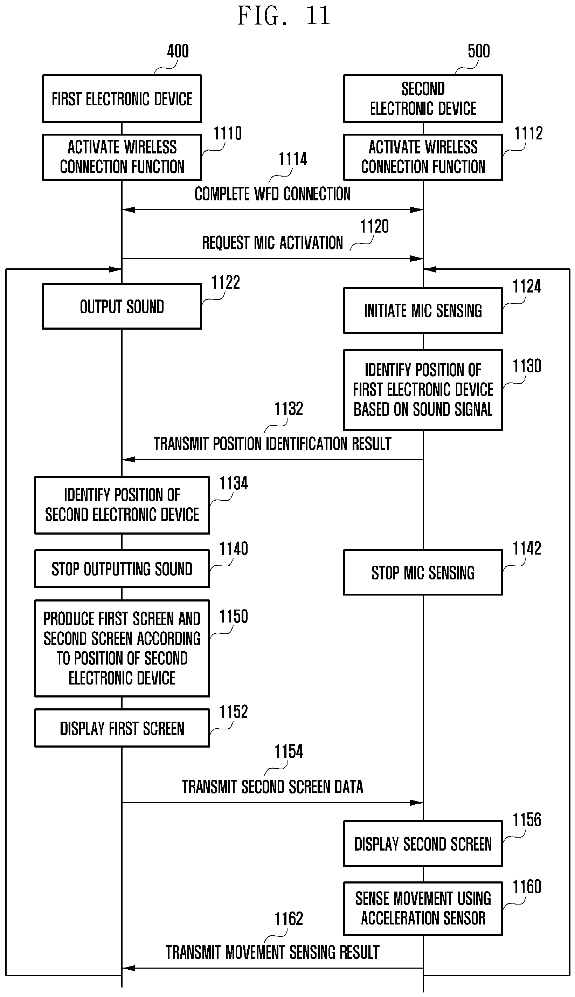

FIG. 11 is a flowchart illustrating a method for configuring an extended display of an electronic device according to various embodiments.

The embodiment of FIG. 11 may include a method of recognizing the position of the second electronic device 500 according to the second embodiment described above. The method illustrated in FIG. 11 may be performed by the first electronic device 400 (e.g., the electronic device 400 in FIG. 4) and the second electronic device 500 (e.g., the electronic device 500 in FIG. 5) described above, and the description of the technical features described above will be omitted below.

According to various embodiments, in operation 1110, the first electronic device 400 may activate a short-range wireless communication connection function if an extended display function is activated based on a user input. Here, the short-range wireless communication may be Wi-Fi direct (hereinafter, WFD), but is not limited thereto.

According to various embodiments, in operation 1112, the second electronic device 500 may activate a short-range wireless communication connection function if a second screen function is activated based on a user input.

According to various embodiments, in operation 1114, the first electronic device 400 and the second electronic device 500 may establish WFD. For example, if a short-range wireless communication connection function of the first electronic device 400 and the second electronic device 500 is activated, a channel may be established by scanning and recognizing the respective devices. The first electronic device 400 and the second electronic device 500 may transmit and receive data related to position recognition of the device and produced screen data through the established short-range wireless communication connection (e.g., WFD connection).

According to various embodiments, in operation 1120, the first electronic device 400 may transmit a microphone activation request to the second electronic device 500 through the established short-range wireless communication connection.

According to various embodiments, in operation 1122, the first electronic device 400 may output a sound signal using a speaker (e.g., the first speaker 425 in FIG. 4). For example, the first electronic device 400 may output a sound in the inaudible range or a sound in the audible range such as a notification sound through the speaker.

According to various embodiments, in operation 1124, the second electronic device 500, in response to the microphone activation request from the first electronic device 400, may activate one or more microphones (e.g., MIC C 571 and MIC D 572) and transmit the activation result to the first electronic device 400.

According to various embodiments, in operation 1130, the second electronic device 500 may recognize a sound output from the first electronic device 400 through the respective microphones (MIC C 571 and MIC D 572) and may identify the position of the second electronic device 500, based on the recognition time and/or volume of the recognized sound. For example, the second electronic device 500 may identify whether the second electronic device 500 is located on the left or right side of the first electronic device 400.

According to various embodiments, in operation 1132, the second electronic device 500 may transmit the position recognition result to the first electronic device 400.

According to various embodiments, in operation 1134, the first electronic device 400 may identify the position of the second electronic device 500, based on the received information.

According to various embodiments, if the position recognition is completed, the first electronic device 400 may stop outputting sound using the speaker in operation 1140, and the second electronic device 500 may stop detecting sound using the microphone in operation 1142.

According to various embodiments, in operation 1150, the first electronic device 400 may configure the screen of the currently running application into a first screen and a second screen according to the identified position of the second electronic device 500.

According to various embodiments, in operation 1152, the first electronic device 400 may display the produced first screen through a display (e.g., the first display 430 in FIG. 4) of the first electronic device 400.

According to various embodiments, in operation 1154, the first electronic device 400 may transmit the produced second screen data to the second electronic device 500. In operation 1156, the second electronic device 500, based on the received second screen data, may display the second screen on a display (e.g., the second display 580 in FIG. 5) of the second electronic device 500. The first screen and the second screen may be displayed in synchronization with each other, and the mouse cursor, window, or the like may move from the first screen to the second screen (or vice versa) according to a user input.

According to various embodiments, the second electronic device 500 may identify movement of the second electronic device 500 using an acceleration sensor (e.g., the acceleration sensor 590 in FIG. 5) in operation 1160, and the second electronic device 500 may transmit the movement detecting result to the first electronic device 400 in operation 1162.

According to various embodiments, if it is identified that the second electronic device 500 has moved, the first electronic device 400 and the second electronic device 500 may return to operations 1120 to 1124 and perform operations of recognizing the position of the second electronic device 500 again.

An electronic device 400 according to various embodiments may include a display 430, a speaker 425, a wireless communication circuit 435, and a processor 410 operatively connected to the display 430, the speaker 425, and the wireless communication circuit 435, and the processor 410 may be configured to detect activation of an extended display configuration function, establish a wireless connection with an external device using the wireless communication circuit 435, output a predetermined sound using the speaker 425, receive a recognition result of a position of the external device from the external device, produce a first screen to be displayed on the display 430 and a second screen to be displayed on a display 430 of the external device, based on the received recognition result of the position of the external device, display the produced first screen on the display 430, and transmit the second screen to the external device using the wireless communication circuit 435.

## Claims

1. An electronic device comprising:
a display;
a first microphone;
a second microphone disposed to be spaced apart from the first microphone;
a wireless communication circuit; and
a processor operatively connected to the display, the first microphone, the second microphone, and the wireless communication circuit,
wherein the processor is configured to:
detect activation of an extended display configuration function;
establish a wireless connection with an external device using the wireless communication circuit;
detect a sound output from the external device using the first microphone and the second microphone;
recognize a position of the external device, based on a first sound signal obtained by the first microphone and a second sound signal obtained by the second microphone;
produce a first screen to be displayed on the display and a second screen to be displayed on a display of the external device, based on the recognized position of the external device;
display the produced first screen on the display; and
transmit the second screen to the external device using the wireless communication circuit.

2. The electronic device of claim 1, wherein the first microphone and the second microphone are configured to detect a predetermined sound.

3. The electronic device of claim 1, wherein the first microphone and the second microphone are configured to detect a sound in an inaudible range.

4. The electronic device of claim 1, wherein the first processor is configured to recognize the position of the external device, based on at least one of a time at which the first sound signal and the second sound signal are detected or volume thereof.

5. The electronic device of claim 4, wherein the processor is configured to determine the position of the external device to be a left side or right side.

6. The electronic device of claim 1, wherein the processor is configured to terminate an operation of detecting the sound using the first microphone and the second microphone in case that the recognition of the position of the external device is completed.

7. The electronic device of claim 6, wherein the processor is configured to reactivate the first microphone and the second microphone and detect a sound output from the external device in case that movement of the external device is identified after recognizing the position of the external device.

8. The electronic device of claim 1, wherein the first screen and the second screen are connected to each other.

9. The electronic device of claim 1, wherein the first microphone and the second microphone are configured to form microphone receiving beams to the left and right of the electronic device in order to recognize a sound of the external device.

10. The electronic device of claim 1, wherein the processor is configured to output a notification through the display in case that the position of the external device is not recognized for a predetermined time.

11. The electronic device of claim 1, wherein the wireless communication circuit is configured to establish a wireless connection with the external device using Wi-Fi direct.

12. A method for configuring an extended display of an electronic device, the method comprising:
detecting activation of an extended display configuration function;
establishing a wireless connection with an external device;
detecting a sound output from the external device using a first microphone and a second microphone;
recognizing a position of the external device, based on a first sound signal obtained by the first microphone and a second sound signal obtained by the second microphone;
producing a first screen to be displayed on a display of the electronic device and a second screen to be displayed on a display of the external device, based on the recognized position of the external device;
displaying the produced first screen on the display; and
transmitting the second screen to the external device.

13. The method of claim 12, wherein the detecting of the sound comprises detecting a sound in an inaudible range.

14. The method of claim 12, wherein the recognizing of the position of the external device comprises recognizing the position of the external device, based on at least one of a time at which the first sound signal and the second sound signal are detected or volume thereof.

15. An electronic device comprising:
a display;
a speaker;
a wireless communication circuit; and
a processor operatively connected to the display, the speaker, and the wireless communication circuit,
wherein the processor is configured to:
detect activation of an extended display configuration function;
establish a wireless connection with an external device using the wireless communication circuit;
output a predetermined sound using the speaker;
receive a recognition result of a position of the external device from the external device; produce a first screen to be displayed on the display and a second screen to be displayed on a display of the external device, based on the received recognition result of the position of the external device;
display the produced first screen on the display; and
transmit the second screen to the external device using the wireless communication circuit.
